# EUROPEAN PATENT SPECIFICATION

(11) **EP 0 416 114 B1**
(45) Date of publication and mention of the grant of the patent: **15.09.1999**
(21) Application number: 90902680.9
(22) Date of filing: 31.01.1990
(51) Int. Cl.: G06T 7/00, H04N 3/15, H04N 5/235

(54) **IMAGE PROCESSING METHOD AND APPARATUS**
BILDVERARBEITUNGSVERFAHREN UND -VORRICHTUNG
PROCEDE ET APPAREIL DE TRAITEMENT D'IMAGES

(30) Priority: 31.01.1989 JP 119690; 11.09.1989 JP 23273489; 21.01.1990 JP 21082990; 24.01.1990 JP 21426790
(43) Date of publication of application: 13.03.1991
(73) Proprietor: YAMADA, Yoshiro, Toshima-ku, Tokyo 171 (JP)
(72) Inventor: YAMADA, Yoshiro, Tokyo 171 (JP); HOSODA, Toshiaki, Kanagawa 242 (JP)
(74) Representative: Casalonga, Axel
(86) International application number: JP9000112
(87) International publication number: WO9009004

(56) References cited:
- EP-A- 280 256
- JP-A- 4 960 653
- JP-A- 5 480 651
- JP-A- 5 794 887
- JP-A- 6 084 679
- JP-A- 56 153 484
- JP-A- 58 114 175
- JP-A- 60 123 974
- JP-A- 63 115 274
- JP-A- 63 127 382
- JP-B- 4 614 088
- JP-B- 4 617 697
- JP-U- 49 107 984
- JP-U- 61 161 609
- US-A- 4 584 606
- "Instrumentation for Ground-Based Optical Astronomy", L.B. Robinson Ed., Springer, New York (1988), pp. 192-208. R.S. Ellis et al.: "Multiple Object Spectroscopy".
- "Bauelemente der Optik", H. Naumann, G. Schröder, 4th edition, pp. 559-560, 1993, Carl Hanser Verlag, München
- SPIE. Vol. 331 "Instrumentation in Astronomy IV" (1982), pp. 404-414. M. Tarenghi et al.: European Southern Observatory (ESO) automatic prime focus camera and the general problem of remote control
- Publications of the Astronomical Society of the Pacific, vol. 99, September 1987, pp. 1014-1021. R. Kibrick et al.: "The Lick Observatory TV Autoguider".

## Description

The present invention relates to a method and an apparatus for processing an image by sensing the state of a test object as image information by means of a sensor or sensors and deciding or displaying the image information.

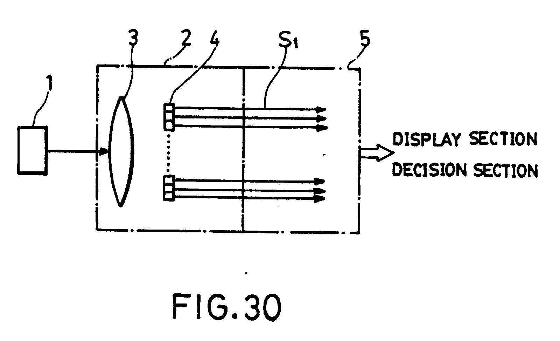

In the past, a method and an apparatus for processing an image by sensing the state of the test object as image information by means of sensors and deciding or displaying the sensed image information, for example, as shown in Fig. 30, senses the state of a test object 1 as image information by a plurality of sensors 4 through a lens 3 of a camera 2, outputs a plurality of image information signals S1 corresponding to the number of sensors 4, processes the image information signals S1 by processing means 5, and decides or displays the state of the test object 1.

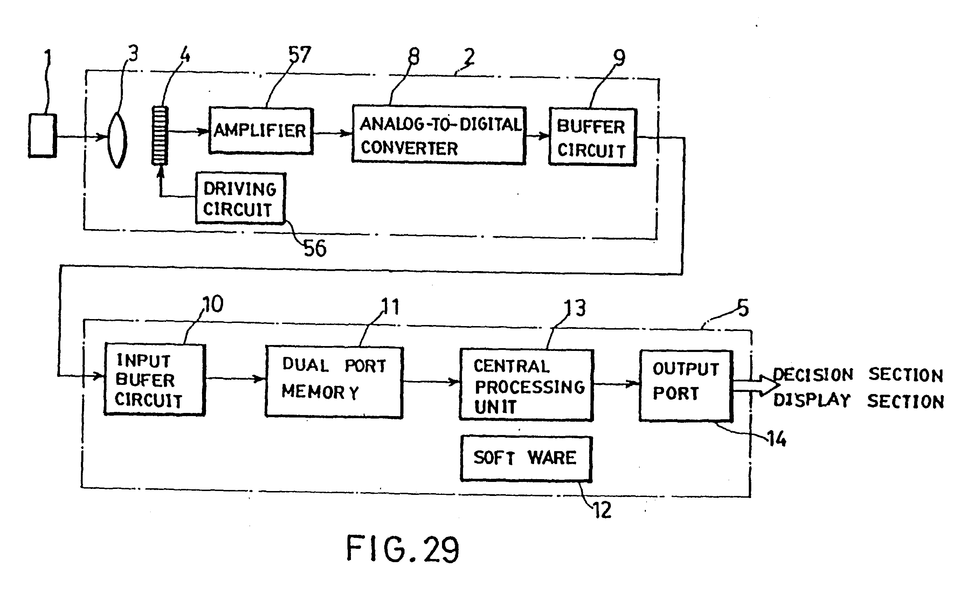

The image processing apparatus comprises the camera 2 and processing means 5 as shown in Figs. 29 and 30.

Camera 2 comprises the lens 3 for refracting the image information on the state of the test object 1, the plurality of sensors 4 for sensing the image information, a driving circuit 6 for driving the sensors, an amplifier 57 for amplifying the signals from the sensors 4, an analog-to-digital converter 8 for converting the signals amplified by the amplifier 57 from analog signals to digital signals, and a buffer circuit 9 for buffering and outputting the digital signals.

Then, the processing means 5 consists of an input buffer circuit 10 for inputting and buffering the image information signals S1 from the buffer circuit 9, a dual port memory 11 for storing output signals from the input buffer circuit 11, a central processing unit 13 for processing the signals from the dual port memory 11 on the basis of a software 12 and an output port 14 for outputting the signals processed by the central processing unit 13 to a decision section or a display section.

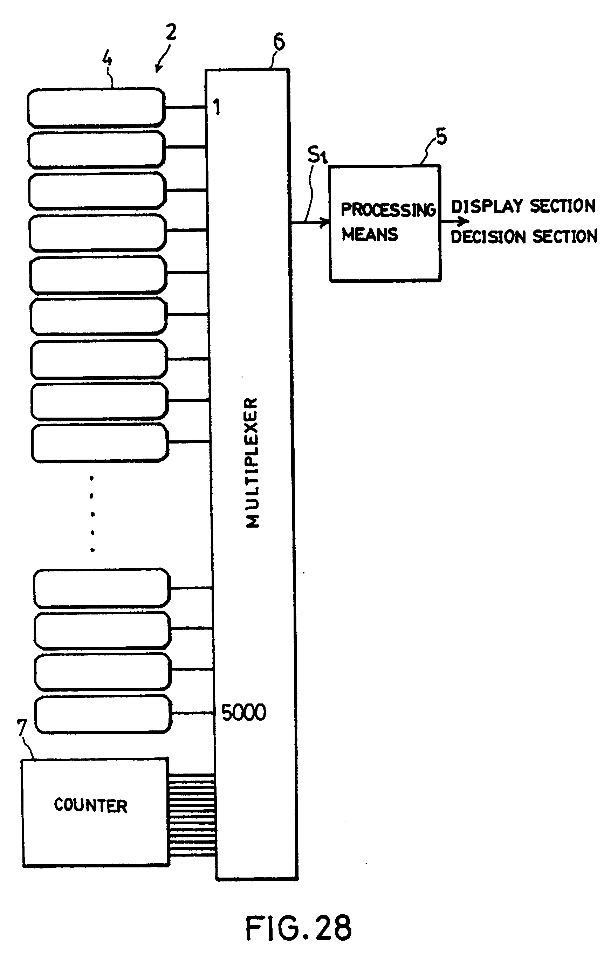

Another prior art image processing apparatus, as shown in Fig. 28, consists of a plurality of sensors 4 provided to a camera 2 for sensing the state of test object 1 as image information through a lens 3 and ouputting image information signals S1 of the number corresponding to the number of the sensors 4, a multiplexer 6 for receiving in parallel and simultaneously the plurality of image information signals S1 outputted from the sensors 4 and for outputting the image information signals S1 sequentially in time every specified number by a counter 7 and processing means 5 for receiving and processing the image information signals S1 outputted from the multiplexer 6 sequentially in time every specified number.

The output of the processing means 5 is further supplied to a display section or a decision section to display or decide the state of the test object 1.

The above method and apparatus of the prior art, however, decides or displays the state of the test object 1 on the basis of one image information signal S1 to one element of the sensors 4.

For this purpose assuming that each of the sensors 4 can sense the brightness, for example, in 256 tones, there have been problems that the improvement of the ability of sensing the brightness tone with respect to the sensors 4 themselves is difficult and also the more precise sensing of the brightness tone of the test object 1 is difficult.

Therefore, there has been a problem that it is difficult to sense a general pattern, a detailed pattern, an aggregation state or subtle defects of the test object 1.

EP-A-0135 494 discloses a 2D-detector array in which the pixels are rebinned to provide a quadrant detector and in addition four sections of five pixels indicating N, E, S and W directions.

JP-A-56 153484 discloses a preliminary processing system for patterns comprising scanning and image patterns, converting each image signal into either of "0" value or "1" value, positionning the two value conversion data, classifying the data in correspondance to the positionning, and counting the data thus classified.

The document of H. Naumann, G. Schröder "Bauelemente der Optik", 4th edition, pages 559 - 560, Carl Hanser Verlag, München, discloses a conventional quadrant photodiode used for centering an object.

It is an object of the present invention to provide a method and an apparatus which can precisely sense the tone of brightness of the test object on the basis of image information, and hence can precisely sense a general pattern, a detailed pattern, an aggregation state or subtle defects of the test object.

Furthermore, it is an object of the present invention to provide a method and an apparatus which, even if the test object and its background have a similar pattern, can precisely sense the tones of brightness thereof and also can precisely sense the general pattern, the detailed pattern, aggregation states, or subtle defects of the test object.

Still furthermore, it is an object of the present invention to provide a method and an apparatus which even if the test object moves in a predetermined direction, on the basis of image information, can precisely sense the tone of brightness thereof and also can precisely sense the general pattern, the detailed pattern, aggregation state, subtle defects of the test object and so on.

As claimed the invention proposes a method of processing an image by sensing brigthness of a test object imaged onto an array of sensors through a lens of camera, said sensors defining scanning lines for said test object, comprising the steps of:
a) tilting said sensor array relative to the optical axis of said lens and outputting plural brightness signals from said tilted sensor array corresponding to the respective brightness value;
b) obtaining on each scanning line at least a first summed signal by summing first plural brightness signals outputted from a first specified set of said sensors on said each scanning line, and obtaining on each scanning line at least a second summed signal by summing second plural brightness signals outputted from a second specified set of said sensors on each scanning line, said second specified set of said sensors being different from the first specified set of said sensors;
c) subtracting for said each scanning line said first and second summed signal from each other;
d) deciding the presence of or displaying the defects of the test object from said obtained subtracted signals.

According to an embodiment of the invention, in step b) the number of summed brightness signals changes in each scanning line for obtaining many first and second summed signals in each scanning line.

The width of said test object may be sensed by said brightness signals and in step b) the number of summed brightness signals in each scanning line can be set in correspondance to said sensed width.

The method may further comprise a step of modifying the camera resolution.

The method, can further comprise a step of multiplying said outputted brightness signals by respective multipliers, and a step of changing the values of at least some of said multipliers before the summing step b).

As claimed, the invention proposes also an image processing apparatus comprising at least one camera having an array of sensors and a lens having an optical axis tilted relative to the array of sensors and through which said array of sensors, defining scanning lines for a test object, are adapted to sense brightness of said test object, and to output brightness signals of the number corresponding to the number of sensors, and processing means receiving the outputted brightness signals, and further comprising a first multiplexer receiving said outputted brightness signals and a first counter adapted to address successively in time said multiplexer in order for the multiplexer to deliver to said processing means for each scanning line at least a first number of outputted brightness signals outputted from at least a first specified set of sensors on said each scanning line, and at least a second number of outputted brightness signals outputted from at least second specified set of sensors on said each scanning line, said first and second sets of sensors being different from each other, said processing means comprising a first arithmetic unit for summing said first number of outputted brightness signals and making at least a first summed signal, a second arithmetic unit for summing said second number of outputted brightness signals and making at least a second summed signal, and a third arithmetic unit for subtracting said first and second summed signals from each other to make a subtracted signal, and outputting means for outputting the subtracted signals to a decision or display section for deciding the presence of or displaying the defects of the test object.

Said counter may be adapted to modify said first and second number in every scanning line for obtaining many first and second summed signals in each scanning line.

Said first and second numbers may be set every scanning line in correspondance to the sensed width of said test object.

Said camera can be provided with a zoom mechanism.

The apparatus may comprise plural cameras, respectively located at different distances from said test object.

Said processing means may be adapted to multiply said outputted brightness signals by respective multipliers and to change the values of at least some of said multipliers before delivering the signals to the first and second arithmetic units.
Figs. 1 (a), (b) and (c) are views explaining a method and an apparatus for processing images, which do not illustrate all the features of the invention as claimed,
Fig. 2 is a view explaining the image processing of a test object and a background,
Figs. 3 and 4 are views explaining the test object,
Fig. 5 is a view explaining image processing method and apparatus according to the present invention,
Figs. 6 through 27 are views explaining various apparatuses which do not illustrate all the features of the invention as claimed,
Figs. 28 and 29 are views explaining apparatuses of the prior art, and
Fig. 30 is a view explaining a method and apparatus of the prior art.

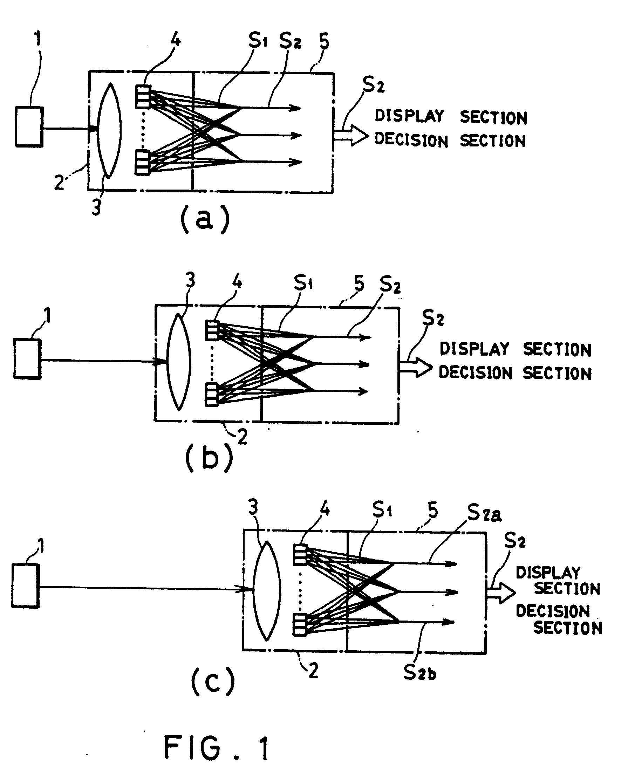

As shown in Figs.1 (a), (b), and (c), since the plurality of image information signals S1 are summed and then the respective summed signals S2 are used to decide or display the brightness grade, the tone of brightness of a test object can be sensed more precisely.

In other words, assuming that, for example, one sensor can sense two hundred fifty six (256) tones of brightness, when the image information signals S1 outputted from, for example, one hundred sensors are summed, then one hundred times two hundred fifty six grades of brightness will be able to be sensed.

Furthermore, as shown in Fig.1(c), a first summed signal S2a obtained from more of the plurality of image information signals S1 and second summed signals S2b obtained from less of the plurality of image information signals S1 are operated and finally outputted as summed signals S2 to be utilized for decision or display of the tone of brightness.

The first summed signal S2a obtained from the more of the plurality of image information signals S1 permits a general pattern of test object 1 to be recognized.

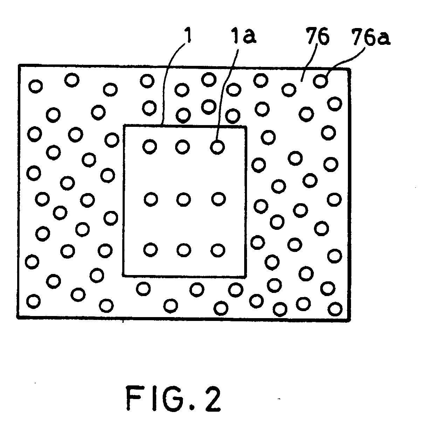

The second summed signal S2b obtained from the less of the plurality of image imformation signals S1 permits the detailed pattern la of test object 1 or the detailed pattern 76a of background 76, as shown in Fig.2.

The operation of the first summed signals S2a and the second summed signal S2b such as addition, subtraction, multiplication and division, permits either the detailed pattern la of the test object 1 or the detailed pattern 76a of the background 76 to be recognized.

Thus, even if the detailed pattern la of test object 1 is similar to the detailed pattern 76a of the background 76, the pattern and the tone of brightness of the test object 1 and the background 76 can more precisely be sensed and hence the general pattern, the detailed pattern la, the aggregation state and the subtle defects of test object 1, the detailed pattern 76a of the background 76 and so on can precisely be sensed.

Additionally, even though the test object 1 is located at any position in the background 76, the patterns la or 76a can stably be sensed.

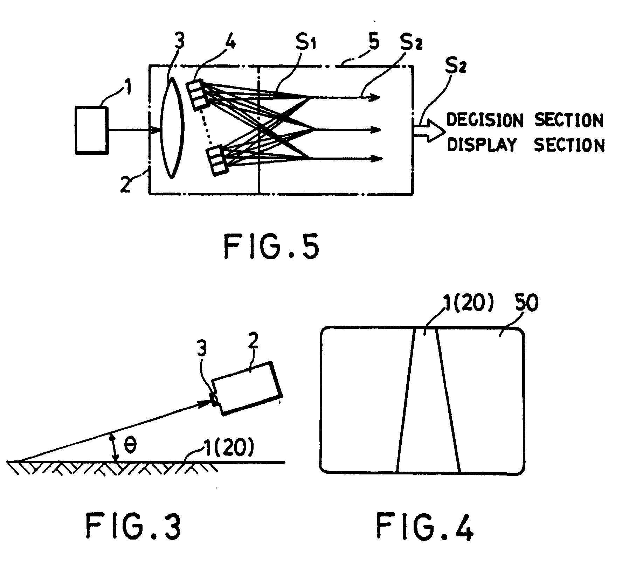

Moreover, if the optical axis of the lens 3 of the camera 2 is at an angleθ relative to a white line 20 having a uniform width along its length, which line is the test object 1, as shown in Fig.3, the white line 20 is sensed with the portion near this side enlarged, as shown in Fig.4.

If the enlarged portion near this side of the white line 20 is sensed by, for example, one thousand sensors 4 corresponding to the width of the enlarged portion and the image information signals S1 are summed, the background 50 is not sensed, but only the white line 20 is sensed, so that the accurate brightness of the white line 20 is sensed in the enlarged portion of the white line 20 near this side.

However, when the remote portion of the white line 20, which is sensed as narrrower width, is sensed by the same one thousand sensors 4, not only the white line 20, but also the background 50 are sensed, so that it becomes difficult that even the summation of the image information signals S1 provides the accurate brightness of the white line 20 due to the influence of the brightness of the background 50. To cope with this, the number of sensors 4, or the number of image imformation signals S1 to be summmed is varied for every scanning line.

In other words, the number of sensors 4, or the number of image information signals Sl to be summed, is varied for every scanning line so that the remote portion of the white line 20, which portion is sensed as being narrow, is sensed by, for example, six hundred sensors 4.

Alternatively, if a row of the sensors 4 are located in the tilted relationship relative to the optical axis of the lens 3, as shown in Fig.5, both the foreground and remote portions of the white line 20, which is the test object, occupy the same width on the row of sensors 4, and hence the brightness of the white line 20, or the test object, can accuratly be sensed.

Thus, even if the optical axis of the lens 3 of the camera 2 forms the angleθ to the test object 1 the conditions, such as brightness, of the test object 1 can surely be sensed.

Consequently, the general pattern, the detailed pattern, the aggregation state, subtle defects and so on of the test object can precisely be sensed.

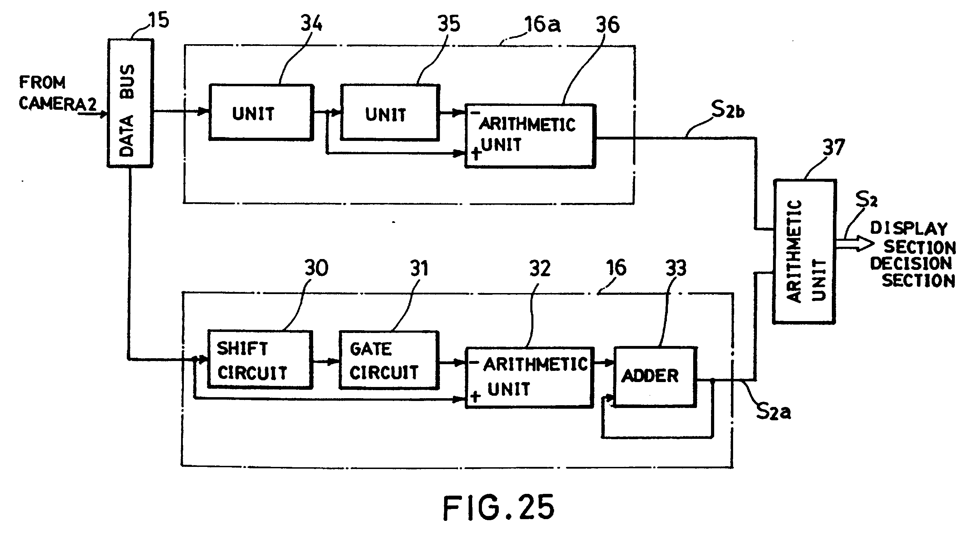

The image processing method in accordance with the present invention is the same as the conventional method of Fig. 25 in sensing the state of a test object 1 as image information by, for example, a plurality of sensors 4 via a lens 3 of a camera 2, outputting a plurality of image information signals S1 corresponding to the number of the sensors 4, and deciding or displaying the plurality of the image information signals S1.

In a method of this embodiment, the plurality of the image information signals S1 are summed up as shown in Figs. 1 (a), (b) and (c) and then summed signals S2 are decided and displayed.

Furthermore, an arithmetic operation is performed between first summed signals S2a summed from more o-f a plurality of the image information signals S1 and second summed signals S2b summed from less of the plurality of the image information signals S1 to obtain summed signals S2c, as shown in Fig. 1 (c), and eventually, the plurality of summed signals S2 are outputted to a decision section or a display section to decide or display the state of the test object .

Herein, the term, "arithmetic operation" means addition, subtraction, multiplication, division and the like.

Furthermore, in the image processing method of the present invention, the state of a white line 20, which is the test object 1, for example, moving to this side as shown in Figs. 3 and 4, is sensed as image information by a plurality of sensors 4, the plurality of the image information signals S1 corresponding to the number of said sensors 4 are outputted and then the image information signals S1 are summed up.

The plurality of the image information signals S1 are summed up and the number of image information signals S1 to be summed is varied for every scanning line.

Furthermore, said plurality of summed signals S2 are outputted to the decision or display sections to decide or display the state of the test object.

Hereupon, the number of the image information signals S1 to be summed may be predetermined for every scanning line.

Hereupon, the width of test object 1 having a known width may be sensed by the image information signals S1 and then the number of the image information signals S1 to be summed may be set in correspondence to the sensed width.

Furthermore, in a method in accordance with the present invention, by tilting an array of the sensors 4 relative to the optical axis of the lens 3, the lightness of the white line 20,or the test object 1, which moves towards this side is sensed and the plurality of the image information signals S1 are summed.

Additionally, the image may be processed with the resolution of the camera relative to the test object varied.

Specifically, as shown in Figs. 1 (a), (b) and (c), the image may be processed by varying the distance between the test object 1 and the camera 2, or by varying the resolution of the camera 2 by zoom means not shown.

Also, the image may, of course, be processed with the range to be tested in the test object 1 being shifted.

Also, the image information signals S1 may be with the weights of given image information signals S1 varied.

The term "weight" means a multiplier to be multiplied to the lightness obtained as the image information signals S1.

The important portion of the test object 1 can be sensed well by varying the weight .

Furthermore, the image information signals S1 outputted from the plurality of the sensors 4 within a speficied range may be processed.

Herein, the term "specified range" means that all or a portion of the plurality of the sensors 4 can be selected.

By selecting only a required portion of the plurality of the sensors 4, the state of only a required test range of the test object 1 can be sensed, hereby processing time being reduced.

Additionally, the term "specified range" includes, of course, not only the array of the sensors 4, but also the case where the sensors 4 are gathered in two dimensions.

Still furthermore, the image information signals S1 outputted from the plurality of the sensors 4 continuously arranged are, of course, processed, but the image information signals S1 outputted from the plurality of the sensors 4 discontinuously arranged may be processed.

The selection of the plurality of the sensors 4 discotinuously arranged results in the reduction of the process ing time of the image information signals.

Alternatively, the first and second summed signals S2 may be provided by separately summing the first and second image information signals S1 outputted from the first and second specified range of the pluralities of the sensors 4 which are positionally different, and then the first and second summed signals S2 may be compared mutually.

The comparing process facilitates the mutual comparison of patterns in the different ranges of the test object 1.

Moreover, after previously storing the first summed signal S2 which results from the summation of the first image information signals S1 outputted from the plurality of the sensors 4 within the first specified range, the second summed signal S2 may be obtained by summing the second image information signals S1 outputted from the plurality of the sensors 4 within the first specified range, and the first and the second summed signal S2 may be compared mutually.

Also, by sensing samples and storing them, the comparison between the patterns of the samples and the test object 1 can easily be performed.

Still further, after previously storing the first summed signal S2 which results from the summation of the first image information signals S1 outputted from the plurality of the sensors 4 within the first specified range, the second summed signals S2 may be obtained by summing the second image information signals S1 outputted from the plurality of the sensors 4 within the second specified range, and then the first and the second summed signals S2 may be compared mutually.

This comparing process facilitates the comparison between the patterns in the different ranges of the test object 1.

Now, the apparatus used for the method according to the present invention will be described.

The image processing apparatus shown in Fig. 1 (a) consists of the camera 2 having the plurality of the sensors 4 for sensing the state of the test object 1 as image information through the lens 3 and outputting the image information signals S1 of the number corresponding to the number of the sensors 4, and processing means 5 receiving the plurality of the image information signals (S1) outputted from the camera 2, summing each of said plurality of the image information signals S1 and outputting the plurality of the summed signals S2 to the decision section or the display section.

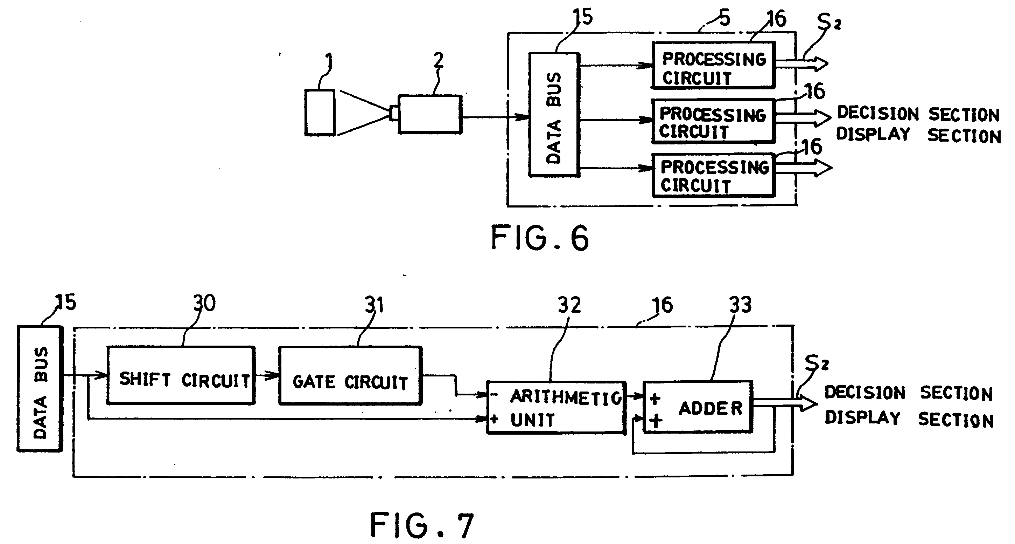

Moreover, in this embodiment, the processing means 5 comprises a data bus 15 and a plurality of processing circuits 16, as shown in Fig. 6, and processes the signals without varying the distance between the camera 2 and the test object 1, that is, the resolution with respect to the test object 1.

Furthermore, the processing circuit 16 comprises a shift circuit 30, a gate circuit 31, an arithmetic unit 32 and an adder 33, as shown in Fig. 7.

The processing circuit 16 is used in the case where the image information signals of the state on a given line on the test object 1 are summed.

The image information signals are inputted from the data bus 15 to the shift circuit 30 and the arithmetic unit 32 at the lightness tone of eight bits.

The number of shifts in the shift circuit 30 may optionally be set according to the length of the given line to be summed.

The gate circuit 31 holds its output signal at zero value until the number of shifts reaches the number commensurate with the length of the given line preset for the arithmetic unit 32.

During that period of time, the arithmetic unit 32 outputs the image information signals themselves from the data bus 15, and the information corresponding to the number of shifts are integrated by the adder 33 having a feed-back circuit.

After the information signals of the steps commensurate with the length of the given line is inputted, the gate circuit 31 opens its output, and the operation is advanced with the length of the given line held by subtracting by the arithmetic unit 32 the image information signals before reaching the number of shifts stored in the shift circuit 30.

By the aforesaid construction and operation, the summation in a predetermined scale can be performed in real time.

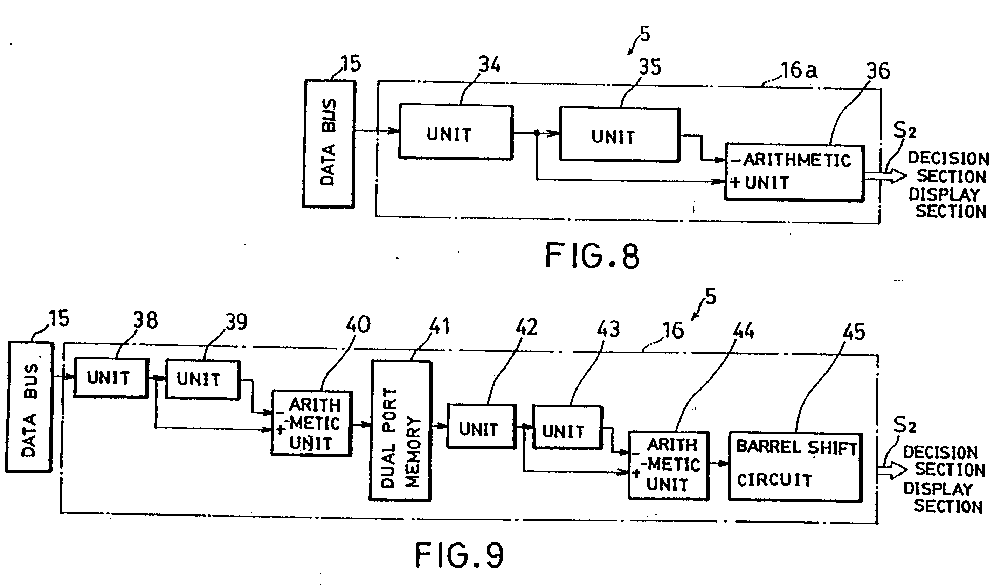

Then, another processing circuit 16a comprises units 34, 35 and arithmetic unit 36, as shown in Fig. 8.

These units 34 and 35 are the same as the processing circuit 16 as shown in Fig. 7 in their construction.

The processing circuit 16a shown in Fig. 8 is used in the case where the summation is performed in real time while correlating the image information signals of the state on the given line on the test object 1.

The image information signals from the data bus 15 is inputted to the unit 34 and the output from the unit 34 is the signal resulting from the summation of the image informaiton signals of the state on the given line on the test object 1.

This output signals are inputted to the unit 35 and further to the arithmetic unit 36.

The inputs of the arithmetic unit 36 consist of two groups of signals: one group is the output signals from the unit 34 which signals are summed on the length of the given line and the other group is the output signals from the unit 35 which signals are taken from the event in sucession and summed on the length of the given line.

The output signals from the arithmetic unit 36 result in operating the relative relationship between both the signals.

By the above construction and operation, the image processing with respect to objects including the scattering of lightness can be performed in real time.

Next, still another processing circuit 16 is composed, as shown in Fig. 9, of units 38, 39, an arithmetic 40,a dual port memory 41, units 42, 43, an arithmetic unit 44 and a barrel shift circuit 45.

The units 38, 39, 42 and 43 are the same as those of the processing circuit 16 shown in Fig. 7 in their construction.

Furthermore, the processing circuit 16 of Fig. 9 is in its construction and operation the same as the processing circuit 16 consisting of the units 38, 39 and the arithmetic unit 40 shown in Fig. 8 and relatively performs the summation of the image information signals on the given line.

This result is connected to the part consisting of the units 42, 43 and the arithmetic unit 44 and summing the longitudinal line of the image while mapping in the dual port memory 41 in real time.

But this construction the arithmetic unit 44 obtains as its output signals the result of the image information signals in a range defined by a transverse line and the longitudinal line.

The barrel shift circuit 45 sums the image information signals in real time from the operation results in which the number of figures is increased through each operation, by the required number of bits.

Also, furthermore, in performing operation, processing in which weights are changed in real time by operating with preset multipliers through a multiplyer circuit can easily be done.

The processing circuit 16 shown in Fig. 9 is used in the case where the image information signals of the state on the given range on the test object 1 are summed in real time.

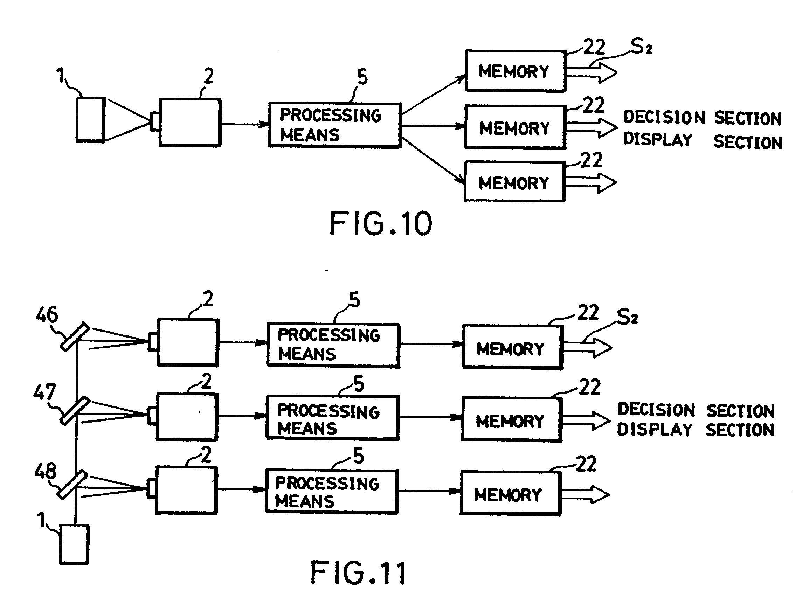

Further, another image processing apparatus includes, as shown in Fig. 10, comprises the camera 2 including zoom means (not shown) and the processing means 5 for processing the image information signals by changing the resolution by changing the distance between the test object 1 and the sensor 4 as shown in Figs. 1 (a), (b) and (c), and a plurality of memories 22 for storing the plurality of the summed signals obtained in accordance with the resolution of the respetive cameras by the processing means 5.

Furthermore, another image processing apparatus, as shown in Figs. 1 (a), (b) and (c) and Fig. 11, comprises a plurality, for example, three, of the cameras 2 which are different in their distances relative to the test object 1, or resolution, from each other, the processing means 5 provided in correspondence to each of the cameras 2, and the plurality of memories 22 for storing the plurality of the summed signals in accordance with the resolution of the respective cameras.

Between each of the cameras 2 and the test object 1 are provided a total reflection mirror 46, and semi-transparent mirrors 47 and 48.

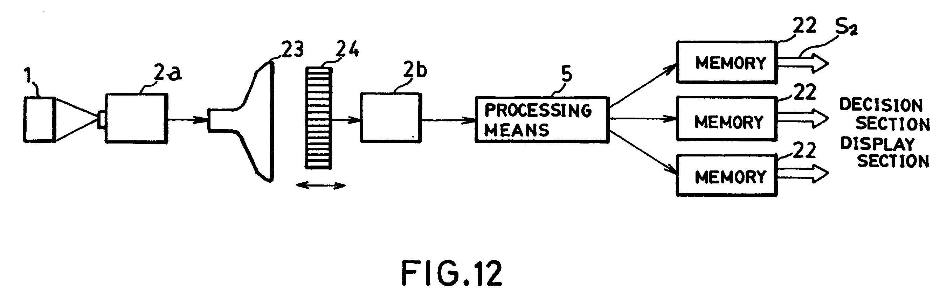

A further image processing apparatus, as shown in Fig. 12, comprises a first camera 2a having the plurality of the sensors 4 for sensing the state of the test object 1, as image information and outputting first image information signals corresponding to the number of the sensors 4, a cathode ray tube 23 for displaying an image by means of the image information signals outputted from the first camera 2a, optical fibers 24 having a sensing end facing to the cathode ray tube 23 and adapted to sense the image and make the distance relative to the cathode ray tube 23 variable, a second camera 2b having the plurality of the sensors 4 for sensing the image as image information and outputting the second image information signals of the number corresponding to the number of the sensors 4, processing means 5 receiving the second image information signals from the second camera 2b, summing the plurality of the image information signals within positionally specified range as a single given image information signal and processing the plurality of the summed signals, and a plurality of memories 22 for storing each of the plurality of the summed signals from the processing means 5 in response to variation of a distance between the sensing end of the optical fibers 24 and the cathode ray tube 23.

Further, the processing means 5 sums the given image information signals with the multipliers or weights for the image information signals changed.

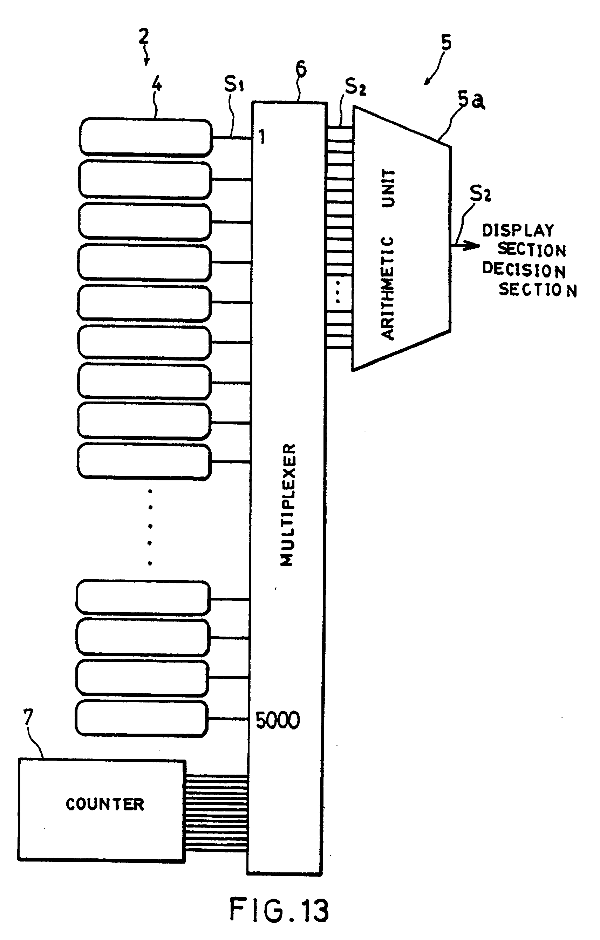

In an embodiment shown in Fig. 13, an arithmetic unit 5a, which serves as processing means 5, is adapted to sum the image information signals S1 outputted from the pluralily of the sensors 4 to a single given image information signal S1, and decide or display each of the summed signals S2.

Moreover, the camera 2 may be constructed to vary the resolution relative to the test object 1, and concretely, the camera 2 may include zoom mechanism (not shown) processing the image while varying the resolution relative to the test object 1, or, as shown in Figs. 1 (a), (b) and (c), the plurality of the cameras 2 each may be provided at different distances relative to the test object 1 to have different resolutions and the processing means 5 may be provided in correspondence to each of the cameras 2.

Further, the camera 2, of course, may be constructed to be moveable over a test range of the test object 1.

And, processing means 5 may be constructed to sum image information signals 1 in a specified range with the weight varied relative to the given image information signal S1.

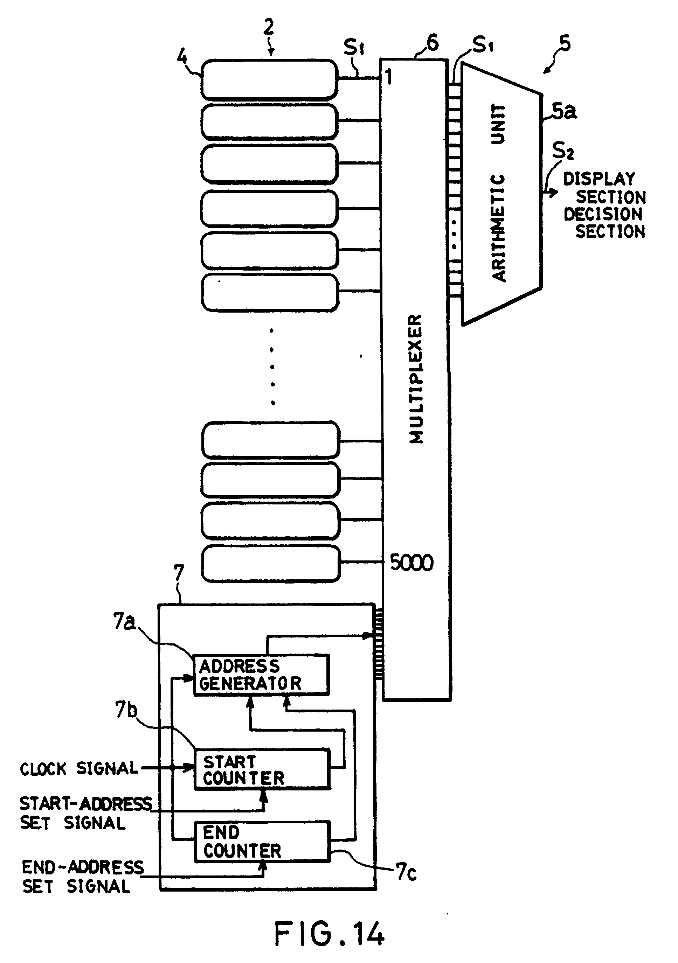

Furthermore, in an embodiment shown in Fig. 14, a first counter 7 is adapted to address a multiplexer 6 so that the multiplexer 6 outputs the image information signals in a specified range.

Specifically, the first counter 7 comprises an address generator 7a, a start counter 7b and an end counter 7c, and counts by clock signals and addresses the first multiplexer 6 by a START ADDRESS SET signal and an END ADDRESS SET signal.

Furthermore, the first multiplexer 6 is adapted to process the image information signals S1 outputted from the plurality of the sensors 4 continuously arranged, and also it may be constructed to process the image information signals outputted the plurality of the sensors 4 discontinuously arranged.

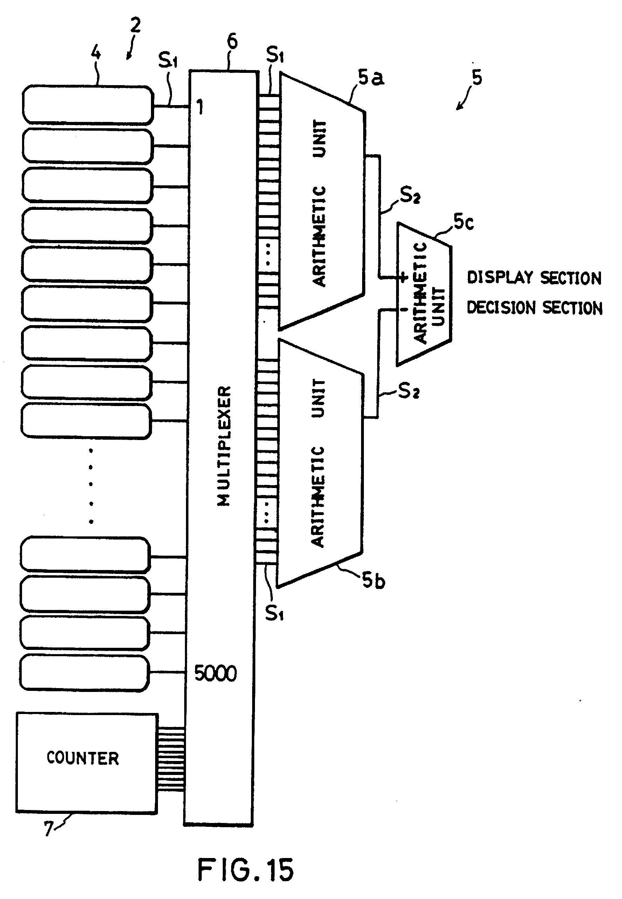

Furthermore, in an embodiment shown in Fig. 15 processing means comprises first and second arithmetic units' 5a and 5b each connected to the first multiplexer 6 and providing the first and second summed signals S2, respectively, by summing each of the first and second sets of image information signals S1 outputted from the first and second plurality of sensors 4 within first and second specified ranges which each occupy different positions, and a third arithmetic unit 5c calculating the difference between the first and second summed signals S2 outputted from the first and second arithmetic units' 5a and 5b.

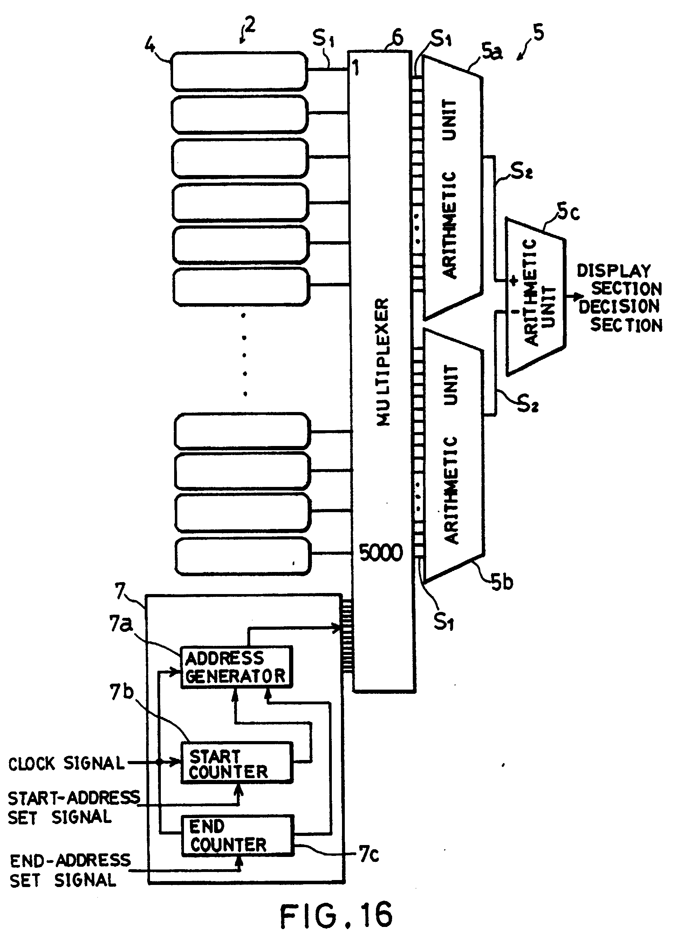

An embodiment shown in Fig. 16 includes the first counter 7 included in the embodiment of Fig. 14 added to the embodiment of Fig. 15.

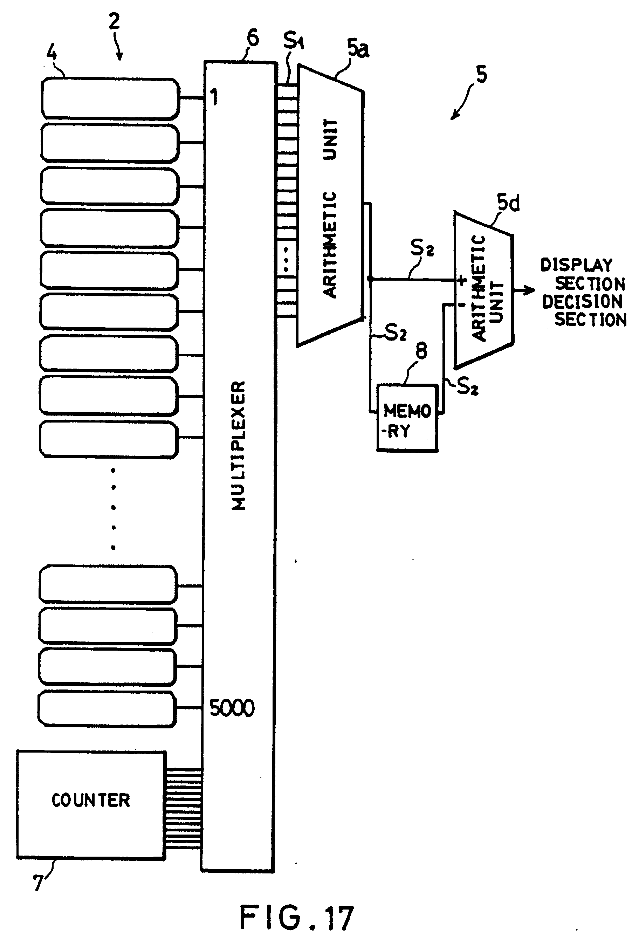

Furthermore, in an embodiment shown in Fig. 17, the processing means 5 may comprise the first arithmetic unit 5a providing the first summed signal S2 by summing the first image information signals S1 outputted from the plurality of the sensors 4, a memory 8 previously storing the first summed signals S2, and the second arithmetic unit 5d for calculating the difference between the first summed signals S2 and the second summed signals S2 produced by summing second image information signals S1 outputted from the plurality of the sensors 4 after storing the first summed signal S2 in the memory 8.

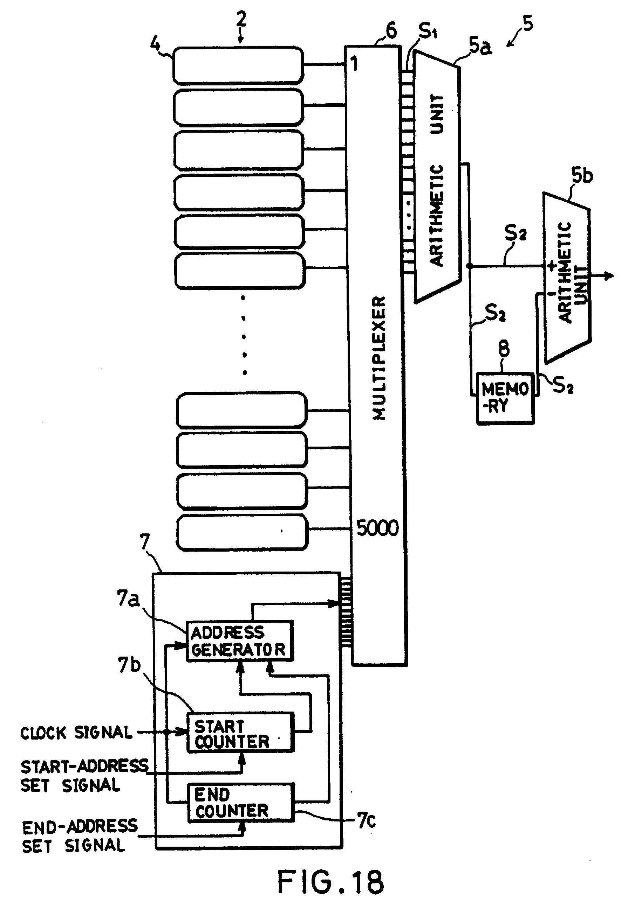

An embodiment shown in Fig. 18 includes the first counter 7 included in the embodiment of Fig. 14 added to the embodiment of Fig. 17.

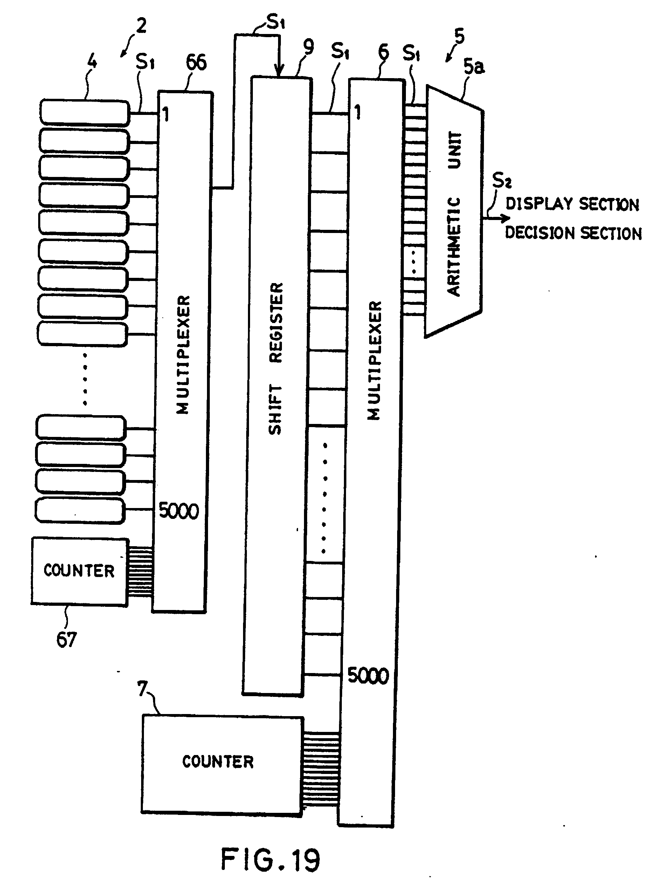

Now, in an embodiment showing in Fig. 19, a second multiplexer 66 provided with a second counter 67 is connected to the plurality of the sensors 4, a shift register 9 is connected to the multiplexer 66 and receives the plurality of the image in formation signals S1 sequentially in time from the second multiplexer 66 and outputts the image information signals S1 parallel and simultaneously, and a first multiplexer 6 is connected to the shift register 9 and receives the plurality of the image information signals S1 outputted from the shift register 9.

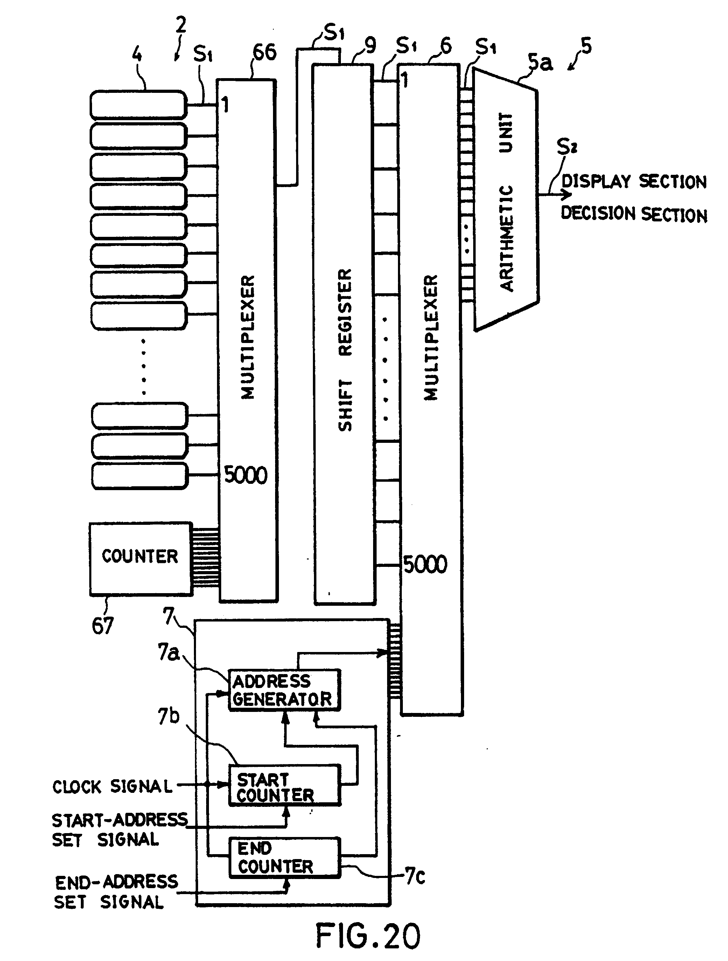

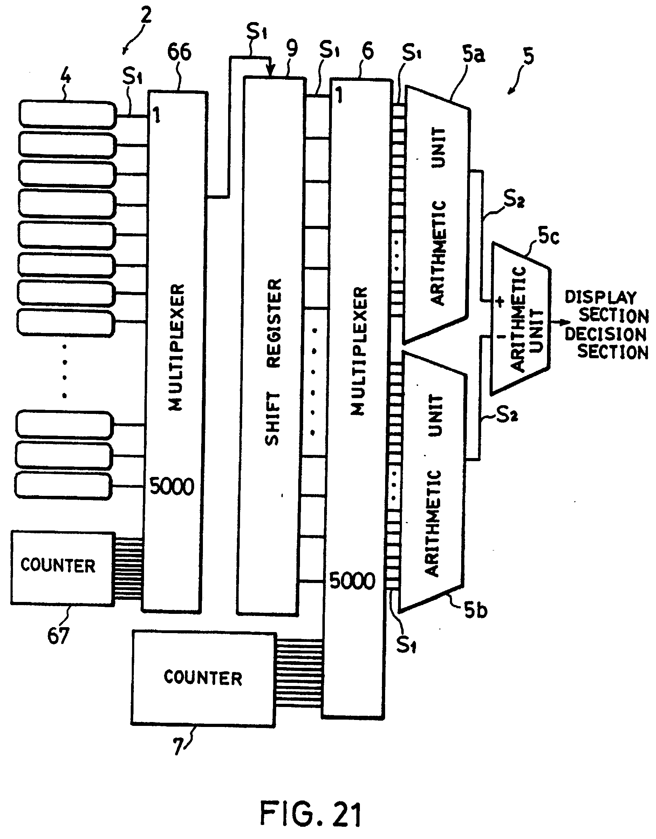

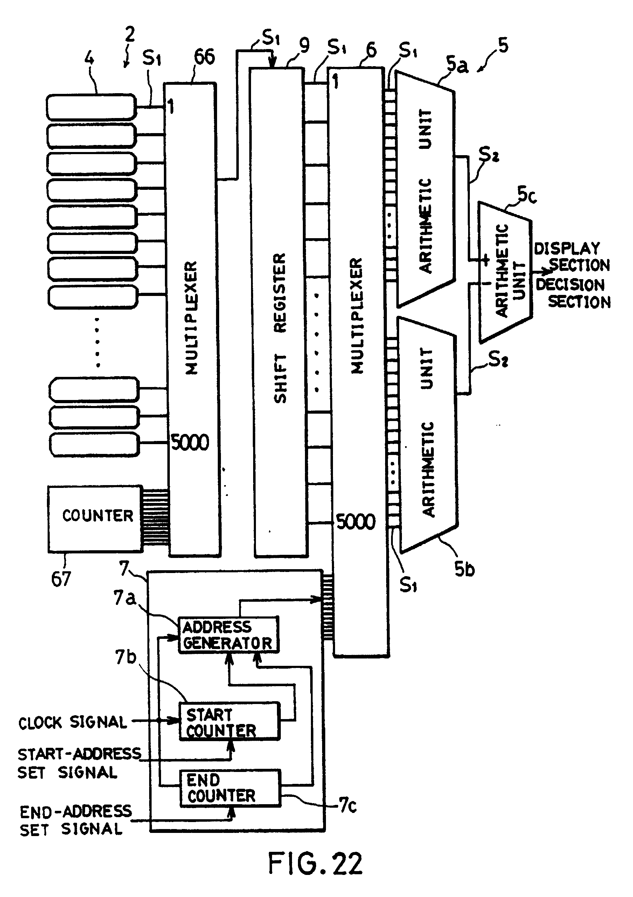

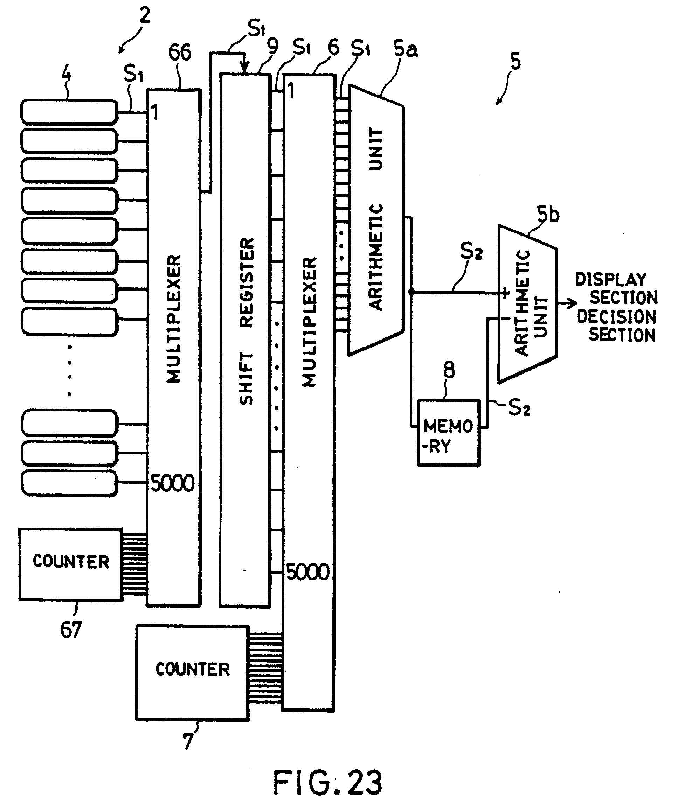

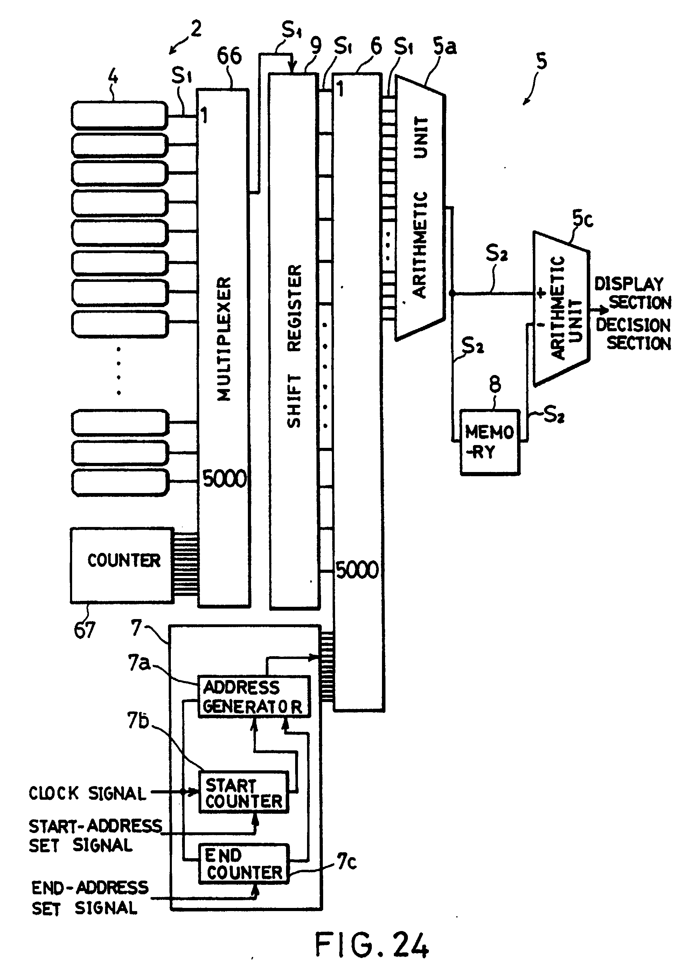

Furthermore, Figs. 20 to 24 show embodiments including the second counter 17, the second multiplexer 66 and the shift register 9 included in the embodiment of Fig. 19 in addition to the components of the embodiments shown in Figs. 13 to 18.

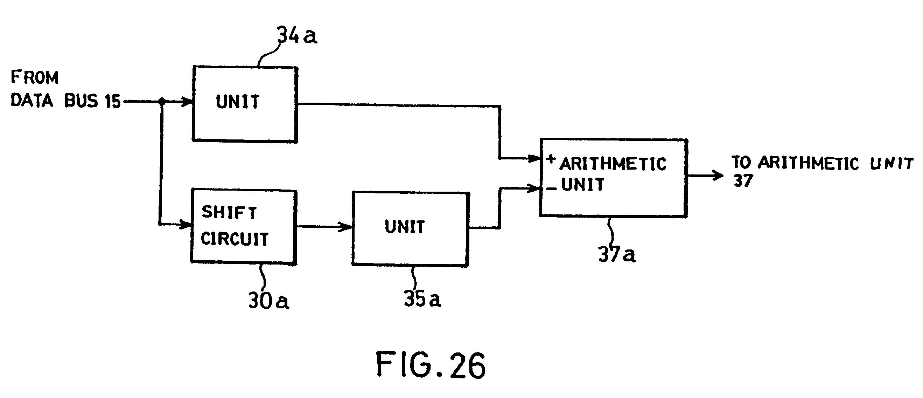

An image processing apparatus shown in Figs. 25 and 26 consist of the camera 2 having the plurality of the sensors 4 and outputting the image information signals S1 of the number corresponding to the number of the sensors 4, and the processing means 5 receiving said image information signals S1 outputted from the camera 2, operating the first summed signal S2a derived from the plurality of the image information signals S1 and the second summed signal S2b derived from less of the plurality of the image information signals S1 and outputting the result to the decision section or the display section.

The processing means 5 is shown in Fig. 25. A data bus 15 is connected to the sensors 4 of the camera 2 (not shown), said data bus 15 being connected to a processing circuit 16.

Furthermore, the processing circuit 16 consists of a shift circuit 30, a gate circuit 31, an arithmetic unit 32 and an adder 33.

Furthermore, the adder 33 is connected to an arithmetic unit 37.

The image information signals S1 are inputted from the sensors 4 of the camera 2 through the data bus 15 to the shift circuit 30 and the arithmetic unit 32 in, for example, the lightness tone of eight bits.

The number of the image information signals S1 to be summed is set by the shift circuit 30.

The gate circuit 31 holds an output signal O with respect to the AU 32 until the gate circuit reaches the number of shifts corresponding to the number of the image information signals to be summed.

During the holding time, the output of the AU 32 outputs the image information signals S1 themselves from the data bus 15 to the adder 33 having a feedback circuit by which adder the image information corresponding to the set number of shifts is accumulated.

The gate circuit 31 opens its output after the image information signals S1 of the number to be summed have been inputted to the gate circuit 31, and at the arithmetic unit 32 the image information signal S1 before reacing the number of shifts set by the shift circuit 30 is substracted from the output of the gate circuit 31, whereby the operation is advanced to sum the image information signals S1 while holding the number of the image information signals S1 to be summed.

As a result, the processing circuit 16 outputs to the arithmetic unit 31 the first summed signal S2a derived from more of the image information signals S1 on a scanning line on the test object.

Next, a processing circuit 16a consists of units 34 and 35 and an arithmetic unit 36.

The units 34, 35 has the same construction as that in the processing circuit 16.

The image information signals from the data bus 15 are inputted to the unit 34 whose output signals are signals obtained by summing the image information signals S1 on the same test object 1.

These output signals are inputted to the units 35 and further to the arithmetic unit 36.

The inputs into the arithmetic unit 36 are two groups of signals, one group of output signals, which are summed signals, from the unit 34 and the other group of output signals, which are also summed signals, from the unit 35. Furthermore, the arithmetic unit 36 outputs to the arithmetic unit 37 second summed signals S2b derived from the less of the image information signals S1.

The arithmetic unit 37 operates the first summed signals S2a derived from the more of the image information signals S1 and the second summed signals S2b derived from the less of the image inforamtion signals S1, and outputs the resulting summed signal S2 to the decision section or the display section to decide or display the result.

Hereupon, the arithmetic unit 37 consists of an adder, a subtractor multiplier, a gate circuit, etc.

Furthermore, the processing circuit 16a may be constructed in a same way to the processing circuit 16.

Further, the processing circuit 16 may, as shown in Fig. 26, be comprised of a unit 34a, an arithmetic unit 37a, a shift circuit 30a, and a unit 35a.

The data bus 15 is connected to the unit 34a and the unit 34a is connected to the arithmetic unit 37a.

The data bus 15 is further connected to the arithmetic unit 37a through the shift circuit 30a and the unit 35a. The arithmetic unit 37a is, further, connected to the arithmetic unit 37. The number of shifts in the shift circuit 30a is set to, for example, two times the number of shifts in the shift circuit 30.

Both the units 34a and 35a is constructed in a same way to those of the processing circuit 16 shown in Fig. 25.

Alternatively, both the processing circuits 16 and 16a shown in Fig. 25 may be constructed as shown in Fig. 26.

The camera 2 may be provided with a zoom mechanism (not shown) changing the resolution relative to the test object 1.

Alternatively, the plurality of the cameras 2 may be positioned at the different distances from the test object 1 to provide the different resolutions.

The image processing apparatus may be constructed so as to process the information with the test range of the test object 1 being moved by moving the camera 2.

Moreover, the processing means 5 may be constructed so as to sum the specified image information signals S1 with their weights, that is, multipliers, being varied.

Alternatively, the processing means 5 may be constructed to process the image information signals S1 outputted from the plurality of the sensors 4 within the specified range.

Furthermore, the processing means 5 may be constructed to process the image information signals S1 outputted from the plurality of the sensors 4 arranged continuously.

Furthermore, the processing means 5 may be constructed to process the image information signals S1 outputted from the plurality of the sensors 4 arranged discontinuously.

The image processing appartus shown in Fig.1(a) comprises the camera 2 having the plurality of the sensors 4 for sensing the state of a test object 1 as image information via the lens 3 and outputting the image information signals S1 of the number corresponding to the number of the sensors 4, and the processing means 5 receiving the image information signals S1 outputted from the camera 2, summing the plurality of the image information signals S1 with the number of the image information signals S1 to be summed being varied in every scanning line and outputting the plurality of the summed signals S2 to the decision section or the display section.

Hereupon, the processing means 5 may be constructed so as to preset the number of the image information signals S1 to be summed in every scanning line.

Hereupon, the processing means 5 may be constructed so as to sense the width of the test object whose width is known by the image information S1 and vary the number of the image information signals S1 to be summed in every scanning line in response to said sensed width.

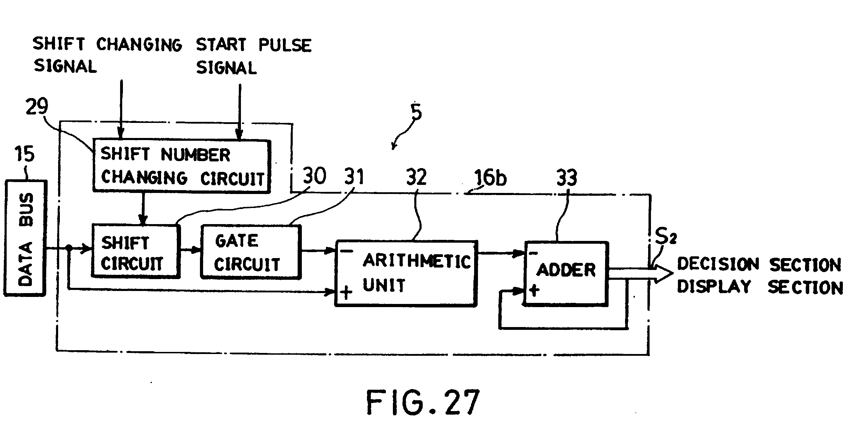

Furthermore, in this embodiment,the processing means 5 comprises,as shown in Fig.27, the date bus 15 connected to the sensors 4 of the camera 2 shown in Fig.1(a) and the processing circuit 6. The sensors 4 consist of, for example, 5,000 sensors and sense lightness at 5,000 points. Data at each of the points are outputted in the time sharing mode by the multiplexer(not shown) and inputted into the data bus.

And, the processing circuit 16 consists of a shifting number changing circuit 29, a shift circuit 30, a gate circuit 31, an arithmetic unit 32 and an adder 33.

This processing circuit 16 sums the image information signals S1 on the scanning lines on the test object 1.

The image information signals S1 are inputted from the sensors 4 of the camera 2 to the shift circuit 30 and the arithmetic unit 32 through the data bus 15 in the eight bits of lightness tones.

The shifting number varying circuit 29 activates the shift circuit 30 by a start pulse signal, and varies the shifting number in the shift circuit 30, that is, the number of the image information signals to be summed, by a shift changing signal between one and one thousand in every scanning line.

The gate circuit 31 holds the output signal O to the arithmetic unit 32 until the shifting number reaches the number corresponding to the number of the image information signals S1.

During that period, the arithmetic unit 32 outputs the image information signals S1 themselves from the data bus 15 and the image information signals S1 for the shiftng number are accumulated by the adder 33 having its feedback circuit.

After receiving the predetermined number or the shifting number of the image information signals S1, the gate circuit 31 opens its output, and operation is advanced with the summing number of the image information signals S1 held by subtracting the image information signals S1 by the arithmetic unit 32 before reaching the number of shifts specified by the shifting number changing circuit 29 and stored in the shift circuit 30.

Then, as shown in Fig.8, another processing circuit 16a comprises units 34, 35 and an arithmetic unit 36.

These units 34 and 35 are the same as the processing circuit 16b shown in Fig.27 in their construction.

The processing circuit 16a shown in Fig.8 is used in the case where the summation is performed in real time while correlating the image information signals S1 on the given line on the test object 1.

The image information signals from the data bus 15 are inputted to the unit 34 and the output from the unit 34 are the signals resulting from the summation of the image information signals S1 on the scanning line on the test object 1.

These output signals are inputted to the unit 35 and further to the arithmetic unit 36.

The inputs of the arithmetic unit 36 consist of two groups of signals : one group is output signals from the unit 34 which signals are summed signals and the other group is output signals from the unit 35 which signals are summed signals.

The output of the arithmetic unit 36 results in operating of the relative relationship between both the output signals.

By the above construction and operation, the. image processing with respect to the test objects including the variation of lightness can be performed in real time.

Next, still another processing circuit 16 is, as shown in Fig.9, comprised of units 38, 39, an arithmetic unit 40, a dual port memory 41, units 42, 43, and an arithmetic unit 44.

These units 38, 39, 42 and 43 are the same as those of the processing circuit 16b shown in Fig.27 in their construction.

Furthermore units 38,39 and arithmetic unit 40 are the same as those of the processing circuit 16b shown in Fig.16b in their construction and operation and iteratively perform the summation of the image information signals on the scanning line.

This result is connected to the part consisting of the units 42, 43 and the arithmetic unit 44 and summing the longitudinal scanning line of the image information signals while mapping in the dual port memory 41 in real time.

By this construction the arithmetic unit 44 obtains as its output signals the result of the image information signals in the range defined by transverse and longitudinal scanning lines.

The processing circuit 16b shown in Fig.27 is used in the case where the image information signals on the specified range on the test object 1 is summed in real time.

Also, as shown in Fig.5, the image information signals S1 outputted from the camera 2 having arrays of sensors tilted relative to the optical axis of the lens 3 is inputted to processing means in which the image information signals S1 are summed and which outputs the plurality of the summed signal S2 to the decision section or the display section.

In all of the above embodiments, the sensor is not limited to the optical sensor, but includes all the types of sensors detecting the states of the objects, such as pressure, temperature and humidity sensors.

Furthermore, while in the above embodiments the image information sensing means uses the plurality of the sensors, a single sensor may be used by using mechanical scanning means, such as a vibrating mirror or multi-side mirror, to scan.

The present invention is used in products inspection process sensing the presence of defects on the products as image information, for example, texture defect inspection in iron manufacture, paper manufacture and nonwoven fabric manufacture.

## Claims

1. Method of processing an image by sensing brigthness of a test object (1) imaged onto an array of sensors (4) through a lens (3) of camera, said sensors defining scanning lines for said test object, comprising the steps of:
a) tilting said sensors array relative to the optical axis of said lens (3) and outputting plural brightness signals (S1) from said tilted sensors array (4) corresponding to the respective brightness value;
b) obtaining on each scanning line at least a first summed signal (S2a) by summing first plural brightness signals outputted from a first specified set of said sensors on said each scanning line, and obtaining on each scanning line at least a second summed signal (S2b) by summing second plural brightness signals outputted from a second specified set of said sensors on each scanning line, said second specified set of said sensors being different from the first specified set of said sensors;
c) subtracting for said each scanning line said first and second summed signal from each other;
d) deciding the presence of or displaying the defects of the test object from said obtained subtracted signals.

2. Method according to claim 1, wherein in step b) the number of summed brightness signals changes in each scanning line for obtaining many first and second summed signals in each scanning line.

3. Method according to claim 1 or 2, wherein width of said test object (1) is sensed by said brightness signals (S1) and in step b) the number of summed brightness signals in each scanning line is set in correspondance to said sensed width.

4. Method according to any one of claims 1 to 3, wherein it further comprises a step of modifying the camera resolution.

5. Method according to any one of claims 1 to 4, wherein it further comprises a step of multiplying said outputted brightness signals (S1) by respective mutipliers, and a step of changing the values of at least some of said multipliers before the summing step b).

6. An image processing apparatus comprising at least one camera (2) having an array of sensors (4) and a lens (3) having an optical axis tilted relative to the array of sensors (4) and through which said array of sensors, defining scanning lines for a test object, are adapted to sense brightness of said test object (1), and to output brightness signals (S1) of the number corresponding to the number of sensors (4), and processing means (5) receiving the outputted brightness signals (S1), and further comprising a first multiplexer (6) receiving said outputted brightness signals (S1) and a first counter (7) adapted to address successively in time said multiplexer in order for the multiplexer to deliver to said processing means for each scanning line at least a first number of outputted brightness signals outputted from at least a first specified set of sensors on said each scanning line, and at least a second number of outputted brightness signals outputted from at least second specified set of sensors on said each scanning line, said first and second sets of sensors being different from each other, said processing means (5) comprising a first arithmetic unit (5a) for summing said first number of outputted brightness signals (S1) and making at least a first summed signal, a second arithmetic unit (5b) for summing said second number of outputted brightness signals (S1) and making at least a second summed signal, and a third arithmetic unit (5c) for subtracting said first and second summed signals from each other to make a subtracted signal, and outputting means for outputting the subtracted signals to a decision or display section for deciding the presence of or displaying the defects of the test object (1).

7. Apparatus according to claim 6, wherein said counter is adapted to modify said first and second number in every scanning line for obtaining many first and second summed signals in each scanning line.

8. Apparatus according to claims 6 or 7, wherein said first and second numbers are set every scanning line in correspondance to the sensed width of said test object.

9. Apparatus according to any one of claims 6 to 8, wherein said camera (2) is provided with a zoom mechanism.

10. Apparatus according to any one of claims 6 to 9, further comprising plural cameras (2), respectively located at different distances from said test object (1).

11. Apparatus according to any one of claims 6 to 10, wherein said processing means are adapted to multiply said outputted brightness signals (S1) by respective multipliers and to change the values of at least some of said multipliers before delivering the signals to the first and second arithmetic units.

## Patentansprüche

1. Verfahren zur Verarbeitung eines Bildes durch Abtastung der Helligkeit eines Testobjekts (1), das auf eine Anordnung von Sensoren (4) durch eine Kameralinse (3) abgebildet wird, wobei die Sensoren Abtastzeilen für das Testobjekt definieren, umfassend die Schritte, daß:
a) die Anordnung von Sensoren in bezug auf die optische Achse der Linse (3) geneigt wird und mehrere Helligkeitssignale (S1) aus der geneigten Sensoranordnung (4) entsprechend dem jeweiligen Helligkeitswert ausgegeben werden;
b) auf jeder Abtastzeile wenigstens ein erstes Summensignal (S2a) erhalten wird, indem mehrere erste Helligkeitssignale, die aus einem ersten spezifizierten Satz der Sensoren auf besagter jeder Abtastzeile ausgegeben worden sind, aufsummiert werden, und auf jeder Abtastzeile wenigstens ein zweites Summensignal (S2b) erhalten wird, indem mehrere zweite Helligkeitssignale aufsummiert werden, die aus einem zweiten spezifizierten Satz der Sensoren auf jeder Abtastzeile ausgegeben worden sind, wobei sich der zweite spezifizierte Satz der Sensoren von dem ersten spezifizierten Satz der Sensoren unterscheidet;
c) für jede Abtastzeile das erste und zweite Summensignal voneinander subtrahiert werden;
d) das Vorhandensein von Defekten des Testobjekts aus den erhaltenen Subtraktionssignalen entschieden wird oder diese angezeigt werden.

2. Verfahren nach Anspruch 1, bei dem sich beim Schritt b) die Zahl der summierten Helligkeitssignale in jeder Abtastzeile ändert, um viele erste und zweite Summensignale in jeder Abtastzeile zu erhalten.

3. Verfahren nach Anspruch 1 oder 2, bei dem die Breite des Testobjekts (1) durch die Helligkeitssignale (S1) abgetastet wird und beim Schritt b) die Anzahl der summierten Helligkeitssignale in jeder Abtastzeile entsprechend der abgetasteten Breite festgesetzt wird.

4. Verfahren nach einem der Ansprüche 1 bis 3, wobei es weiter einen Schritt umfaßt, daß die Kameraauflösung modifiziert wird.

5. Verfahren nach einem der Ansprüche 1 bis 4, wobei es weiter einen Schritt, bei dem die ausgegebenen Helligkeitssignale (S1) mit entsprechenden Multiplikatoren multipliziert werden, und einen Schritt umfaßt, bei dem die Werte wenigstens einiger der Multiplikatoren vor dem Summierungsschritt b) geändert werden.

6. Bildverarbeitungsvorrichtung, umfassend wenigstens eine Kamera (2) mit einer Anordnung von Sensoren (4) und eine Linse (3), deren optische Achse in bezug auf die Anordnung von Sensoren (4) geneigt ist und durch die die Anordnung von Sensoren, die Abtastzeilen für ein Testobjekt definieren, in die Lage versetzt sind, die Helligkeit des Testobjekts (1) abzutasten und Helligkeitssignale (S1) in der Anzahl entsprechend der Anzahl von Sensoren (4) auszugeben, und ein Verarbeitungsmittel (5), das die ausgegebenen Helligkeitssignale (S1) empfängt, und weiter umfassend einen ersten Multiplexer (6), der die ausgegebenen Helligkeitssignale (S1) empfängt, und einen ersten Zähler (7), der in die Lage versetzt ist, in zeitlicher Aufeinanderfolge den Multiplexer zu adressieren, damit der Multiplexer für jede Abtastzeile an das Verarbeitungsmittel wenigstens eine erste Anzahl von ausgegebenen Helligkeitssignalen, die von wenigstens einem ersten spezifizierten Satz von Sensoren auf besagter jeder Abtastzeile ausgegeben worden sind, und wenigstens eine zweite Anzahl von ausgegebenen Helligkeitssignalen abgibt, die von wenigstens einem zweiten spezifizierten Satz von Sensoren auf besagter jeder Abtastzeile ausgegeben worden sind, wobei sich der erste und der zweite Satz von Sensoren voneinander unterscheiden, wobei das Verarbeitungsmittel (5) eine erste arithmetische Einheit (5a) zum Summieren der ersten Anzahl von ausgegebenen Helligkeitssignalen (S1) und Bilden wenigstens eines ersten Summensignals, eine zweite arithmetische Einheit (5b) zum Summieren der zweiten Anzahl von ausgegebenen Helligkeitssignalen (S1) und zum Bilden wenigstens eines zweiten Summensignals und eine dritte arithmetische Einheit (5c) zum Subtrahieren der ersten und zweiten Summensignale voneinander zum Bilden eines Subtraktionssignals und ein Ausgabemittel zum Ausgeben der Subtraktionssignale zu einem Entscheidungs- oder Anzeigeabschnitt umfaßt, um das Vorhandensein von Defekten des Testobjekts (1) zu entscheiden oder diese anzuzeigen.

7. Vorrichtung nach Anspruch 6, bei der der Zähler in die Lage versetzt ist, die erste und zweite Anzahl in jeder Abtastzeile zu modifizieren, um viele erste und zweite Summensignale in jeder Abtastzeile zu erhalten.

8. Vorrichtung nach Anspruch 6 oder 7, bei der die ersten und zweiten Anzahlen in jeder Abtastzeile entsprechend der abgetasteten Breite des Testobjekts festgesetzt werden.

9. Vorrichtung nach einem der Ansprüche 6 bis 8, bei der die Kamera (2) mit einem Zoommechanismus versehen ist.

10. Vorrichtung nach einem der Ansprüche 6 bis 9, umfassend mehrere Kameras (2), die sich jeweils in unterschiedlichen Abständen vom Testobjekt (1) befinden.

11. Vorrichtung nach einem der Ansprüche 6 bis 10, bei der die Verarbeitungsmittel in die Lage versetzt sind, die ausgegebenen Helligkeitssignale (S1) mit entsprechenden Multiplikatoren zu multiplizieren und die Werte von wenigstens einigen der Multiplikatoren vor Abgabe der Signale zu den ersten und zweiten arithmetischen Einheiten zu ändern.

## Revendications

1. Procédé de traitement d'une image par détection de la luminosité d'un objet à mesurer (1) dont on forme l'image sur un réseau de capteurs (4) à travers un objectif (3) d'une caméra, lesdits capteurs définissant des lignes de balayage pour ledit objet à mesurer, qui comprend les étapes consistant à :
a) faire basculer ledit réseau de capteurs par rapport à l'axe optique dudit objectif (3) et délivrer une pluralité de signaux de luminosité (S1) à partir dudit réseau de capteurs basculé (4), correspondant aux valeurs de luminosité respectives,
b) obtenir sur chaque ligne de balayage au moins un premier signal somme (S2a) en faisant la somme d'un premier nombre de signaux de luminosité délivrés par un premier groupe spécifié desdits capteurs sur chaque ligne de balayage, et obtenir sur chaque ligne de balayage au moins un deuxième signal somme (S2b) en faisant la somme d'un deuxième nombre de signaux de luminosité délivrés par un deuxième groupe spécifié desdits capteurs sur chaque ligne de balayage, ledit deuxième groupe spécifié desdits capteurs étant différent dudit premier groupe spécifié desdits capteurs,
c) soustraire pour chaque ligne de balayage lesdits premier et deuxième signaux sommes l'un de l'autre, et
d) décider de la présence de défauts ou afficher les défauts de l'objet à mesurer à partir desdits signaux de soustraction obtenus.

2. Procédé selon la revendication 1, dans lequel le nombre de signaux de luminosité sommés à l'étape (b) change pour chaque ligne de balayage afin de donner de nombreux premier et deuxième signaux sommes pour chaque ligne de balayage.

3. Procédé selon la revendication 1 ou 2, dans lequel la largeur dudit objet à mesurer (1) peut être détectée avec lesdits signaux de luminosité (S1) et, à l'étape (b), le nombre de signaux de luminosité sommés dans chaque ligne de balayage est choisi en fonction de ladite largeur détectée.

4. Procédé selon l'une quelconque des revendications 1 à 3, comprenant en outre une étape de modification du pouvoir de résolution de la caméra.

5. Procédé selon l'une quelconque des revendications 1 à 4, comprenant en outre une étape de multiplication desdits signaux de luminosité délivrés (S1) par des facteurs multiplicatifs respectifs, et une étape de modification des valeurs de certains au moins desdits facteurs multiplicatifs avant l'étape de sommation (b).

6. Appareil de traitement d'image comprenant au moins une caméra (2) qui comprend un réseau de capteurs (4) et un objectif (3) dont l'axe optique est basculé par rapport au réseau de capteurs (4) et à travers lequel ledit réseau de capteurs, qui définit des lignes de balayage pour un objet à mesurer, peut détecter la luminosité dudit objet à mesurer (1) et délivrer des signaux de luminosité (S1) dont le nombre correspond au nombre de capteurs (4), et un moyen de traitement (5) qui reçoit les signaux de luminosité délivrés (S1), et comprenant en outre un premier multiplexeur (6) qui reçoit lesdits signaux de luminosité délivrés (S1) et un premier compteur (7) capable d'adresser séquentiellement dans le temps ledit multiplexeur pour que le multiplexeur délivre audit moyen de traitement, pour chaque ligne de balayage, au moins un premier nombre de signaux de luminosité délivrés, fournis par au moins un premier groupe spécifié de capteurs sur chaque ligne de balayage, et au moins un deuxième nombre de signaux de luminosité délivrés, fournis par au moins un deuxième groupe spécifié de capteurs sur chaque ligne de balayage, lesdits premier et deuxième groupes de capteurs étant différents l'un de l'autre, ledit moyen de traitement (5) comprenant une première unité arithmétique (5a) servant à faire la somme dudit premier nombre de signaux de luminosité délivrés (S1) et à fournir au moins un premier signal somme, une deuxième unité arithmétique (5b) servant à faire la somme dudit deuxième nombre de signaux de luminosité délivrés (S1) et à fournir au moins un deuxième signal somme, et une troisième unité arithmétique (5c) servant à soustraire lesdits premiers et deuxièmes signaux sommes l'un de l'autre pour former un signal de soustraction, et un moyen de sortie servant à délivrer les signaux de soustraction à un étage de jugement ou d'affichage qui décide de la présence de défauts dans l'objet à mesurer (1) ou les affiche.

7. Appareil selon la revendication 6, dans lequel ledit compteur est capable de modifier lesdits premier et deuxième nombres pour chaque ligne de balayage afin d'obtenir de nombreux premiers et deuxièmes signaux sommes pour chaque ligne de balayage.

8. Appareil selon la revendication 6 ou 7, dans lequel lesdits premier et deuxième nombres peuvent être choisis pour chaque ligne de balayage en fonction de la largeur détectée dudit objet à mesurer.

9. Appareil selon l'une quelconque des revendications 6 à 8, dans lequel ladite caméra (2) est équipée d'un mécanisme de zoom.

10. Appareil selon l'une quelconque des revendications 6 à 9, comprenant en outre plusieurs caméras (2), respectivement situées à des distances différentes dudit objet à mesurer (1).

11. Appareil selon l'une quelconque des revendications 6 à 10, dans lequel ledit moyen de traitement est capable de multiplier lesdits signaux de luminosité délivrés (S1) par des facteurs multiplicatifs respectifs et de modifier les valeurs de certains au moins desdits facteurs multiplicatifs avant de délivrer les signaux aux première et deuxième unités arithmétiques.
